# EUROPÄISCHE PATENTANMELDUNG

(11) **EP 1 058 426 A1**
(43) Veröffentlichungstag der Anmeldung: **06.12.2000**
(21) Anmeldenummer: 99108920.2
(22) Anmeldetag: 05.05.1999
(51) Int. Cl.: H04L 12/56, H04Q 11/04

(54) **Verfahren zur Bewertung von Routen in einem Kommunikationsnetz**

(71) Anmelder: SIEMENS AKTIENGESELLSCHAFT, 80333 München (DE)
(72) Erfinder: Rammer, Josef Dr., 1100 Wien (AT); Conte, Marco, 1120 Wien (AT); Fischer, Gerhard, 1210 Wien (AT); Bella, Luigi, 2202 HZ Noordwijk a/Zee (NL); Chummun, Ferial, 2311 GG Leiden (NL)

(57) **Zusammenfassung**

Zur Bewertung von Routen R in einem aus Vermittlungsknoten K und Übertragungswegen U bestehenden Kommunikationsnetz KN werden aus den Übertragungswegen U zugewiesenen Linkkosten LK - vorzugsweise mit Hilfe von Zufallszahlen - veränderte Linkkosten L gebildet und die Routen R in Abhängigkeit von den veränderten Linkkosten L bewertet. Werden die veränderten Linkkosten L bei jedem Verbindungswunsch gebildet, werden Verbindungen V, die entlang mehrerer Routen R mit gleichen minimalen Routekosten RK aufgebaut werden können, unter Beibehaltung bestehender Routing-Algorithmen gleichmäßig auf diese Routen R verteilt.

## Beschreibung

Kommunikationsnetze werden üblicherweise entweder als paketorientierte oder als leitungsorientierte Netze ausgebildet. Hierbei sind paketorientierte Netze eher für die Übermittlung von Informationen ohne Echtzeitcharakter wie z.B. Daten, EMail oder Dateien geeignet, während leitungsorientierte Netze gut auf die Übermittlung von Informationen mit Echtzeitcharakter wie z.B. Sprache oder Bewegtbilder ausgelegt sind. Im Zuge der Konvergenz von leitungs- und paketorientierten Netzen werden jedoch in paketorientierten Netzen zunehmend auch Sprach- und Bewegtbildinformationen übermittelt. Beispiele für paketorientierte Netze sind das Internet oder ATM (= Asynchronous Transfer Modus), wobei die Bezeichnung ATM gelegentlich auch als Synonym für B-ISDN (= Broadband Integrated Services Digital Network) verwendet wird. Am Beispiel von ATM sei die paketorientierte Netztechnologie im weiteren näher erläutert.

Charakteristisch für paketorientierte Netze ist die paketorientierte Übermittlung der Informationen. In ATM-Netzen werden hierbei die Informationen beispielsweise in Pakete gleicher Länge - auch "ATM-Zellen" genannt - aufgeteilt, die einen 5 Bytes umfassenden Zellenkopf (Header) und einen 48 Bytes umfassenden Informationsteil (Payload) aufweisen. Dabei werden die einzelnen Zellen durch die Zellenköpfe bestimmten Informationsströmen - auch "virtuelle Verbindungen" genannt - zugeordnet. Im Gegensatz zu beispielsweise einem leitungsorientierten TDMA-Verfahren, bei welchem Zeitschlitze verschiedenen Typen von Datenverkehr im vorhinein zugeordnet sind, werden die bei einer ATM-Schnittstelle ankommenden Informationsströme in die erwähnten 53-Byte-Zellen segmentiert und anschließend diese Zellen sequentiell in der Reihenfolge, in der sie erzeugt wurden, weiter gesandt. Das bei TDMA zum Einsatz kommende Multiplexverfahren wird auch als "statisches Multiplexing" und das bei ATM zum Einsatz kommende als "statistisches Multiplexing" bezeichnet. In Folge der Flexibilität des statistischen Multiplexing können die Informationsströme bei ATM beliebige Datenraten aufweisen, während bei statischem Multiplexing die Datenrate der einzelnen Informationsströme - auch "Verbindungen" genannt - wegen der festes Zuordnung der Zeitschlitze zu den Informationsströmen festgelegt ist - z.B. auf 64 kbit/s bei ISDN.

In Folge dieses Unterschieds ist in paketorientierten Netzen das Routen einer beantragten Verbindung abhängig von der auf einer Route verfügbaren Restkapazität, während sie in leitungsorientierten Netzen prinzipiell unabhängig von der Auslastung der einzelnen Übertragungswege ist. Beispielsweise kann auf einer Route in einem leitungsorientierten Netz, entlang der z.B. gemäß einem TDM Verfahren 30 Verbindungen in fest zugeordneten Zeitschlitzen mit je 64 kbit/s Kapazität geführt werden können, auch dann in jedem Fall eine weitere Verbindung aufgebaut werden, wenn bereits 29 Verbindungen aufgebaut sind, da die weitere Verbindung wegen ihrer konstanten Datenrate keine höhere Datenrate erfordert als die noch verfügbare Restkapazität von 64 kbit/s. Entlang einer Route in einem paketorientierten Netz mit einer angenommenen Restkapazität von 30 Mbit/s können jedoch lediglich Verbindungen aufgebaut werden, für die eine Datenrate kleiner als 30 Mbit/s beantragt worden ist. Verbindungen mit einer höheren Datenrate werden jedoch zurückgewiesen. Sofern alternative Routen existieren, können sie ersatzweise entlang einer Alternativroute mit ausreichender Restkapazität aufgebaut werden. Zur Ermittlung einer Alternativroute ist jedoch ein erneutes Routen erforderlich.

Es sind verschiedene Routing-Verfahren bekannt, mit denen Routen in Netzen ermittelt werden können. Eine Möglichkeit ist das sog. "Source-Routing", bei dem ausgehend von einem Anfangs-Vermittlungsknoten die komplette Route zu einem Ziel-Vermittlungsknoten ermittelt wird. Für ATM-Netze ist beispielsweise seitens des ATM-Forums im Rahmen der sogenannten in der PNNI(= Private Network-Network Interface)-Spezifikation Source-Routing gefordert. Hierbei wird die Route von dem Anfangs-Vermittlungsknoten ermittelt und anschließend beim Verbindungsaufbau die berechnete Route an die Vermittlungsknoten entlang der Route mit Hilfe der Signalisierung übermittelt. Eine weitere Möglichkeit stellt das sog. "Hop-by-Hop-Routing" dar, bei dem von jedem Vermittlungsknoten entlang einer Route der Rest bzw. das nächste Teilstück der Route neu berechnet wird. Dieses Verfahren kommt beispielsweise im Internet oder in ATM-Netzen ohne Source-Routing zur Anwendung.

Um beim Routen diejenigen Routen auszuscheiden, die überlastete oder unterbrochenen Übertragungswege verwenden, sind sog. Flooding-Verfahren vorgeschlagen. Dabei werden von allen Vermittlungsknoten zu definierten Zeitpunkten die Verkehrswerte der an sie angeschlossenen Übertragungswege gemessen und an alle anderen Vermittlungsknoten innerhalb einer Gruppe weitergegeben. Diese Informationsweitergabe wird "Flooding" genannt. Das Flooding kann zusätzlich auch dann veranlaßt werden, wenn sich die Verkehrswerte der Übertragungswege signifikant verändern - z.B. wenn die aktuelle Auslastung eines Übertragungsweges mit einer Gesamtkapazität von 150 Mbit/s um mehr als 10 Mbit/s von der zuletzt weitergegebenen Auslastung abweicht. Beispielsweise sind in ATM-Netzen im Rahmen der PNNI-Spezifikation Verfahren vorgeschlagen, welche einem Routing-Algorithmus die in den Vermittlungsknoten des ATM-Netzes jeweils zuletzt gemessenen Verkehrswerte der direkt an diese angeschlossenen Übertragungswege zur Verfügung stellen. In Zusammenhang mit PNNI sei auch auf U. Gremmelmaier, J. Püschner, M. Winter and P. Jocher, "Performance Evaluation of the PNNI Routing Protocol using an Emulation Tool", ISS 97 XVI World Telecom Congress Proceedings, pp 401 - 408 verwiesen.

Bekannt ist das Routen in leitungsorientierten, öffentlichen Telephonnetzen. Hierbei erfolgt das Routen üblicherweise in mehreren Schritten, da diese Netze aufgrund der meist großen Zahl von Vermittlungsknoten üblicherweise hierarchisch aufgebaut sind. Verbindungen werden in diesen Netzen in einem ersten Schritt von einem Anfangs-Vermittlungsknoten auf einer unteren Hierarchie-Ebene zu einem Vermittlungsknoten auf der obersten Hierarchie-Ebene, anschliessend in einem zweiten Schritt innerhalb der obersten Hierarchie-Ebene zu einem das Verbindungsziel repräsentierenden Vermittlungsknoten und schließlich in einem dritten Schritt bis zum Ziel-Vermittlungsknoten auf einer unteren Hierarchie-Ebene geroutet. Hierbei werden der erste und der dritte Schritt im allgemeinen durch fix eingestellte Routen oder, falls diese z.B. unterbrochen sind, durch fix eingestellte Alternativrouten bewirkt, während der zweite Schritt häufig lediglich die Auswahl des Übertragungsweges zwischen den beiden betroffenen Vermittlungsknoten der obersten Hierarchie-Ebene erfordert, da die Vermittlungsknoten auf der obersten Ebene untereinander beinahe vollständig vermascht sind. Das für leitungsorientierte Telephonnetze standardisierte Signalisierungsverfahren Nr.7 unterstützt jedoch kein Source-Routing, d.h. der Anfangs-Vermittlungsknoten kann eine von ihm berechnete Route nicht weitergeben. Folglich kennen die Vermittlungsknoten entlang der Route auch die bereits zurückgelegte Route nicht, so daß bei Anwendung dieses Routing-Verfahrens in nicht hierarchisch strukturierten bzw. nur teilweise vermaschten Netzen, z.B. dem Internet, in den Routen Schleifen entstehen können.

Für das Routen in paketorientierten Netzen ist in dem deutschen Patent DE 4441356 ein dynamisches Routing-Verfahren offenbart, bei dem Blockaden von Übertragungswegen erfaßt und aus deren Häufigkeit der Belegungszustand der Übertragungswege ermittelt wird. Aus Zielverkehrsdaten kann durch den Einsatz eines Routing-Management Prozessors die Wahrscheinlichkeit der Belegung von Übertragungswegen off-line berechnet werden. Für eine solche Berechnung eignet sich beispielsweise der "Forward-Looking-Routing" Algorithmus nach K. R. Krishnan, T. J. Ott in Forward-Looking Routing, A New State-Dependent Routing Scheme, Teletraffic Science for New Cost-Effektive Systems, Networks and Services, ITC-12 (1989). Das Verfahren berücksichtigt jedoch nur Verbindungen gleicher und konstanter Bandbreite, wie sie für herkömmliche Telefonverbindungen in leitungsvermittelnden Netzen typisch sind, d.h. die Bandbreite einer Verbindung beträgt z.B. 64 kbits/s. Für paketorientierte Netze wie z.B. ATM-Netze (Asynchronous Transfer Mode) ist hingegen eine konstante Bitrate der Ausnahmefall, denn Verbindungen können entsprechend der Verbindungswünsche der Teilnehmer mit unterschiedlicher und zeitlich variabler Bandbreite durchgeführt werden. Neben der gewünschten Bandbreite, z. B. 1 Mbit/s, enthalten Verbindungsanforderungen von Teilnehmern oft auch noch Information hinsichtlich der geforderten Verbindungsqualität.

Der Erfindung liegt die Aufgabe zugrunde, das Routing für paketorientierte Kommunikationsnetze zu verbessern. Die Aufgabe wird durch die Merkmale des Patentanspruchs 1 gelöst.

Der wesentliche Aspekt der Erfindung besteht in einer Bewertung von Routen in einem aus Vermittlungsknoten und Übertragungswegen bestehenden, insbesondere paketorientierten und gegebenenfalls verbindungsorientierten Kommunikationsnetz, bei der aus den Übertragungswegen zugewiesenen Linkkosten veränderte Linkkosten gebildet und die Routen in Abhängigkeit von den veränderten Linkkosten bewertet werden. Der wesentliche Vorteil der Erfindung ist darin zu sehen, daß sich durch unterschiedliche Veränderungen der ursprünglich zugewiesenen Linkkosten unterschiedliche Bewertungen der Routen ergeben können. Somit kann vorteilhaft durch die Art der Veränderungen der ursprünglichen Linkkosten, d.h. ohne Änderung der Bewertung selbst, die Bewertung der Routen gesteuert werden.

Gemäß einer Ausgestaltung des erfindungsgemäßen Verfahrens ist vorgesehen, daß die veränderten Linkkosten durch Addition von zufällig gewählten reellen Zahlen auf die Linkkosten gebildet werden, wobei der Absolutbetrag der reellen Zahlen kleiner ist als eine maximale Zahl, die so klein gewählt wird, daß die Linkkosten nicht substantiell verändert werden - Anspruch 2. Hiermit ergeben sich für Routen, die ohne Veränderung der ursprünglichen Linkkosten identische Routekosten aufweisen würden, vorteilhaft im allgemeinen minimal unterschiedliche Routenkosten. Allerdings weist eine Route mit signifikant höheren Routekosten als den optimalen Routekosten eine optimalen Route auch bei Veränderung der ursprünglichen Linkkosten deutlich höhere Routekosten auf als die dann ermittelten optimalen Routekosten. Somit wird vorteilhaft lediglich innerhalb einer Gruppe von Routen mit bei unveränderten Linkkosten identischen Routekosten eine minimale Differenzierung der Routekosten bewirkt, während die Zuordnung der Routen zu solchen Gruppen von Routen mit gleichen Routekosten und die Reihenfolge der Gruppen untereinander unverändert bleibt.

Nach einer Weiterbildung des erfindungsgemäßen Verfahrens wird eine in Abhängigkeit von den veränderten Linkkosten definierte optimale Route mit Hilfe eines deterministischen Routing-Algorithmus ermittelt - Anspruch 3. Dies hat den Vorteil, daß ein deterministischer Routing-Algorithmus im allgemeinen weniger komplex ist als ein nicht-deterministischer und somit effizienter bearbeitet werden kann.

Gemäß einer Ausgestaltung des erfindungsgemäßen Verfahrens ist der deterministische Routing-Algorithmus als Dijkstra-Algorithmus ausgebildet - Anspruch 4. Somit kann vorteilhaft bewährte Standardsoftware eingesetzt werden, da der Dijkstra-Algorithmus bereits seit 1959 bekannt ist und sehr effiziente und technisch ausgereifte Implementierungen erhältlich sind. Die optimale Route weisen zudem vorteilhaft minimale Routekosten auf.

Gemäß einer Variante des erfindungsgemäßen Verfahrens werden lediglich für eine angeforderte Verbindung durch das Kommunikationsnetz relevante Routen bewertet - Anspruch 5. Hierdurch wird die Anzahl der zu bewertenden Routen und folglich die Bearbeitungszeit für die Bewertung der Routen vorteilhaft reduziert.

Nach einer Weiterbildung des erfindungsgemäßen Verfahrens erfolgt die Bewertung der Routen bei jeder Anforderung einer Verbindung - Anspruch 6. Durch die Veränderung der Linkkosten, insbesondere durch die zufällige Auswahl der reellen Zahlen wird vorteilhaft bewirkt, daß bei mehreren optimalen Routen, die ohne eine Veränderung der Linkkosten identische minimale Routenkosten aufweisen würden, wahlweise bei jeder Verbindungsanforderung eine dieser Routen für die angeforderte Verbindung ausgewählt wird, obwohl ein deterministischer, d.h. ohne Veränderung der Linkkosten jeweils dieselbe optimale Route ermittelnder Routing-Algorithmus zur Auswahl der verbindungsoptimalen Route eingesetzt wird. Hierdurch wird vorteilhaft die Blockierungswahrscheinlichkeit im statistischen Mittel deutlich reduziert, da die Auslastungen der Übertragungswege gleichmäßiger erfolgt als wenn die Verbindungen alle entlang derselben Route aufgebaut würden

Gemäß einer Anwendung des erfindungsgemäßen Verfahrens auf ein Verfahren zum Aufbau einer Verbindung in einem aus Vermittlungsknoten und Übertragungswegen bestehenden Kommunikationsnetz ist vorgesehen, daß die Verbindung entlang einer für diese optimalen Route aufgebaut wird - Anspruch 7. Somit wird die Bewertung der Routen vorteilhaft für die Auswahl einer Route herangezogen. Insbesondere ist wegen der zufallsgesteuerten Veränderung der Linkkosten bei mehreren vergleichbaren Routen offen, welche der Routen verbindungsoptimal ist. Somit werden die Verbindungen nicht automatisch über dieselbe Route aufgebaut, sondern es erfolgt eine Lastteilung zwischen gleichwertigen Routen. Hierdurch werden die Blockierungsraten für Verbindungen deutlich reduziert.

Nach einer Ausgestaltung der Anwendung des erfindungsgemäßen Verfahrens wird die für die Verbindung optimale Route von dem Vermittlungsknoten ermittelt wird, der die Anforderung der Verbindung bearbeitet - Anspruch 8. Dies hat den Vorteil, daß die Anforderung sehr effizient bearbeitet werden kann, da keine Nachrichten zwischen dem die Anforderung bearbeitenden Knoten und einem weiteren, das Routing durchführenden Knoten erforderlich sind.

Entsprechend einer Weiterbidlung der Anwendung des erfindungsgemäßen Verfahrens wird allen Vermittlungsknoten entlang der für die angeforderte Verbindung optimalen Route diese beim Aufbau der Verbindung mitgeteilt - Anspruch 9. Somit wird die Erfindung vorteilhaft in Netzen mit Source-Routing angewandt.

Das erfindungsgemäße Verfahren wird im folgenden anhand von mehreren Figuren näher erläutert. Dabei zeigt
- Figur 1: in einem Blockschaltbild ein Kommunikationsnetz mit Vermittlungsknoten und Übertragungswegen,
- Figur 2: in einer Tabelle alle Routen, die von dem Vermittlungsknoten K₁ zu den übrigen Vermittlungsknoten des in Figur 1 dargestellten Kommunikationsnetzes ausgehen,
- Figur 3a: in einer Tabelle die erfindungsgemäße Bildung von veränderten Linkkosten aus den Übertragungswegen zugewiesenen Linkkosten, und
- Figur 3b: in einer Tabelle die erfindungsgemäße Bewertung der in Figur 2 aufgeführten Routen in Abhängigkeit von den veränderten Linkkosten.

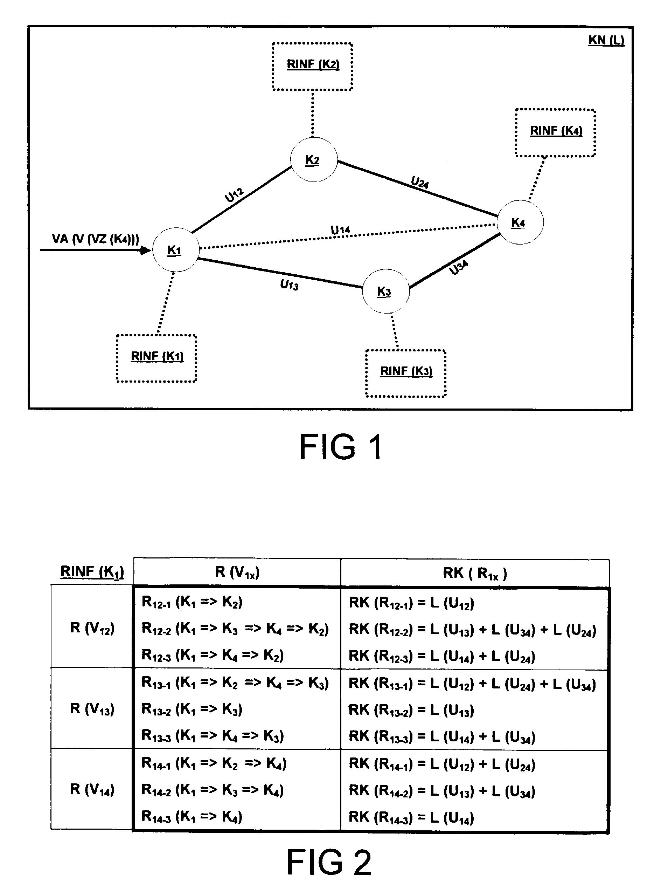

In Figur 1 ist ein Kommunikationsnetz KN mit vier Vermittlungsknoten Kᵢ, 1 <= i <= 4 dargestellt. Der Vermittlungsknoten K₁ ist mit dem Vermittlungsknoten K₂ durch einen Übertragungsweg U₁₂ und mit dem Vermittlungsknoten K₃ durch einen Übertragungsweg U₁₃ verbunden; Der Vermittlungsknoten K₄ ist mit dem Vermittlungsknoten K₂ durch einen Übertragungsweg U₂₄ und mit dem Vermittlungsknoten K₃ durch einen Übertragungsweg U₃₄ verbunden; zwischen den Vermittlungsknoten K₁ und K₄ ist zudem ein Übertragungsweg U₁₄ vorgesehen, der ist in der Zeichnung gepunktet dargestellt ist. Hierdurch sei angedeutet, daß Übertragungswege U - beispielsweise der Übertragungsweg U₁₄ - temporär überlastet und/oder unterbrochen sein können. Jedem der Vermittlungsknoten Kᵢ sind Routinginformationen RINF (Kᵢ) zugeordnet. Durch einen dem Vermittlungsknoten K₁ zugeführten Pfeil wird zudem angedeutet, daß diesem Vermittlungsknoten K₁ eine Anforderung VA für eine Verbindung V zu einem Verbindungsziel VZ - beispielsweise dem Vermittlungsknoten K₄ - übermittelt wird.

In Figur 2 ist die dem Vermittlungsknoten K₁ zugeordnete Routinginformation RINF (K₁) dargestellt. Sie enthält beispielsweise die von dem Vermittlungsknoten K₁ zu den Vermittlungsknoten Kⱼ, 2 <= j <= 4 führenden Routen R₁ⱼ sowie deren Routekosten RK (R₁ⱼ). Die Routen R₁ⱼ sind hierbei als eine von gegebenenfalls mehreren unterschiedlichen Möglichkeiten definiert, von dem Vermittlungsknoten K₁ unter Einbeziehung der Vermittlungsknoten Kⱼ, 2 <= j <= 4 und der Übertragungswege U zu dem Vermittlungsziel VZ - im Beispiel dem Vermittlungsknoten K₄ - zu gelangen. Im Beispiel führen unter Einbeziehung des optionalen Übertragungsweges U₁₄ jeweils drei Routen R₁ⱼ₋ₖ, 1 <= k <= 3 von dem Vermittlungsknoten K₁ zu den Vermittlungsknoten Kⱼ, und zwar ausgehend von dem Vermittlungsknoten K₁ die Route R₁₂₋₁ direkt, die Route R₁₂₋₂ über die Vermittlungsknoten K₃ und K₄ und die Route R₁₂₋₃ über den Vermittlungsknoten K₄ zu dem Vermittlungsknoten K₂; die Route R₁₃₋₁ über die Vermittlungsknoten K₂ und K₄, die Route R₁₃₋₂ direkt und die Route R₁₃₋₃ über den Vermittlungsknoten K₄ zu dem Vermittlungsknoten K₃; die Route R₁₄₋₁ über den Vermittlungsknoten K₂, die Route R₁₄₋₂ über den Vermittlungsknoten K₃ und die Route R₁₄₋₂ direkt zu dem Vermittlungsknoten K₄. Die Routekosten RK (R₁ⱼ₋ₖ) der Routen R₁ⱼ₋ₖ ergeben sich jeweils aus der Summe der veränderten Linkkosten L der jeweils von den Routen verwenden Übertragungswege U. In diesem Beispiel wird aus Gründen der Einfachheit angenommen, daß alle Übertragungswege U bi-direktional und die Linkkosten LK unabhängig von der Richtung der Verbindung sind.

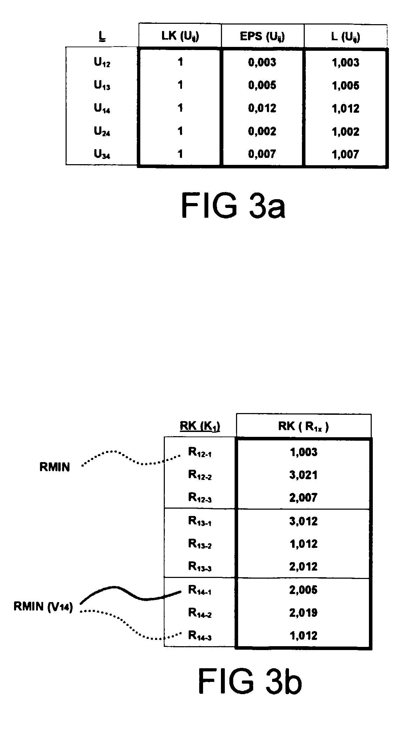

In Figur 3a ist dargestellt, wie aus den Übertragungswegen U zugewiesenen Linkkosten LK in Abhängigkeit von zufällig gewählten Zahlen EPS veränderte Linkkosten L gebildet werden. Beispielsweise seien für die Übertragungswege Uᵢⱼ, ij = 12, 13, 14, 24, 34 die Linkkosten LK (Uᵢⱼ) = 1, die Zahl EPS (U₁₂) = 0,003, die Zahl EPS (U₁₃) = 0,005, die Zahl EPS (U₁₄) = 0,012, die Zahl EPS (U₂₄) = 0,002, die Zahl EPS (U₃₄) = 0,007 und die veränderte Linkkosten L (Uᵢⱼ) = LK (Uᵢⱼ) + EPS (Uᵢⱼ) definiert. Es sei angemerkt, daß der Begriff "Linkkosten" nicht wörtlich im Sinne von "Kosten" zu interpretieren ist. Zur Bildung der Linkkosten LK können beliebige, für die Übertragungswege relevante Werte herangezogen werden wie z.B. Verkehrswerte oder Quality-of-Service-Werte. Durch die Wahl aller Linkkosten LK gleich 1 haben bei Anwendung eines Dijkstra-Algorithmus diejenigen Routen optimale Routekosten RK, die ihr Verbindungsziel VZ über möglichst wenige Vermittlungsknoten K erreichen - diese Optimierungsmetrik wird in der Fachwelt auch "Least Hops" genannt. Es werden somit die Routen R bevorzugt, die ihr Verbindungsziel VZ mit den geringsten Verzögerungszeiten erreichen, da üblicherweise die Gesamtverzögerungszeit einer Route R im wesentlichen durch die Summe der Verzögerungszeiten der Vermittlungen durch die Vermittlungsknoten K bestimmt ist, sofern die Übertragungswege U terrestrisch und nicht über Satelliten geführt sind. Der höchste Absolutbetrag der Zahlen EPS (Uᵢⱼ) ist mit 0,012 so klein, daß sich die veränderten Linkkosten L von den Linkkosten LK nicht signifikant unterscheiden, wodurch die Metrik Least Hops auch bei Ausführung des erfindungsgemäßen Verfahrens erhalten bleibt.

In Figur 3b sind die Routekosten RK der in Figur 2 aufgeführten Routen R₁ⱼ₋ₖ aufgelistet, die entsprechend der in Figur 2 für die Ermittlung der Routekosten RK angegebenen Formel auf Basis der in Figur 3a angegebenen veränderten Linkkosten L ermittelt worden sind. Ohne Berücksichtigung des optionalen Übertragungsweges U₁₄ ist die Route R₁₄₋₁ die optimale Route RMIN mit den geringsten Routenkosten RK aller Routen R. Für die angeforderte Verbindung V zum Vermittlungsknoten K₄ ist die Route R₁₄₋₁ zugleich die verbindungsoptimale Route RMIN (V), da sie im Vergleich zur Route R₁₄₋₂ zwar die gleiche Anzahl Hops, jedoch marginal niedrigere Routekosten RK aufweist. Unter Berücksichtigung des optionalen Übertragungsweges U₁₄ ist die Route R₁₂₋₁ die optimale Route RMIN mit den geringsten Routenkosten RK aller Routen R. Für die angeforderte Verbindung V zum Vermittlungsknoten K₄ ist in diesem Fall die Route R₁₄₋₃ die verbindungsoptimale Route RMIN (V), da sie einen Hop weniger aufweist als die Routen R₁₄₋₁ und R₁₄₋₂, d.h. die für die Route R₁₄₋₃ relevante Zahl EPS (U₁₄) weist zwar im Vergleich aller Zahlen EPS mit Abstand den größten absoluten Wert auf, dieser ändert jedoch die Linkkosten LK nicht substantiell, wodurch die Optimierungsmetrik Least Hops erhalten bleibt.

Für das Ausführungsbeispiel wird angenommen, daß von dem Vermittlungsknoten K₁ durch die Anforderung VA der Aufbau einer Verbindung V zu dem Verbindungsziel VZ angefordert wird. Dieses Verbindungsziel VZ sei als der Vermittlungsknoten K₄, die Verbindung V somit als Verbindung V₁₄ ausgebildet. Zur Einschränkung des Suchraum werden von dem Vermittlungsknoten K₁ lediglich die für diese Verbindung V₁₄ relevanten Routen R (V₁₄) bewertet, d.h. die Routen R₁₄₋₁, R₁₄₋₂ und R₁₄₋₃. Für diese Routen werden mit Hilfe eines Zufallszahlengenerators die Zahlen EPS und anschließend die veränderten Linkkosten L gebildet. Auf Basis dieser veränderten Linkkosten L wird beispielsweise von einem den deterministischen Dijkstra-Algorithmus realisierenden Programm die verbindungsoptimale Route RMIN (V₁₄) bestimmt, d.h. bei Berücksichtigung des ggf. überlasteten und/oder unterbrochenen Übertragungswegs U₁₄ die Route R₁₄₋₃, ansonsten die Route R₁₄₋₁. Sofern der Zustand des Übertragungswegs U₁₄ bekannt ist, z.B. indem der Zustand mit Hilfe eines Flooding-Verfahrens im Netz mitgeteilt wird, erfolgt die Berücksichtigung z.B. dadurch, daß der Übertragungsweg U₁₄ für die Dauer der Überlastung und/oder Unterbrechung für das Routen ausgeschlossen wird, z.B. indem ihm im Vergleich zu den Linkkosten LK der nicht überlasteten und/oder unterbrochenen Übertragungswege U sehr hohe Linkkosten LK zugewiesen werden. Im Anschluß an das Routen wird die angeforderte Verbindung V₁₄ entlang der verbindungsoptimale Route RMIN (V₁₄) aufgebaut.

Besonders schöne Vorteile ergeben sich bei Anwendung der Erfindung in verbindungsorientierten Netzen mit Source-Routing, beispielsweise ATM-Netzen. So kann in diesen Netzen z.B. im statistischen Mittel eine weitgehend gleichmäßige Verteilung von angeforderten Verbindungen auf mehrere verbindungsoptimale Routen RMIN (V) erreicht werden, sofern die Zahlen EPS regelmäßig, z.B. für jede angeforderte Verbindung V erneut gebildet werden. Werden hierbei die Zahlen EPS z.B. mit Hilfe eines Zufallsgenerators gebildet, ergeben sich somit jedesmal andere Routekosten RK für die relevanten Routen R (V). Im Ausführungsbeispiel weisen die Routen R₁₄₋₁ und R₁₄₋₂ die Routekosten RK (R₁₄₋₁) = 2.005 und RK (R₁₄₋₂) = 2.019 auf. Bei der nächsten angeforderten Verbindung V₁₄ könnten beispielsweise die Routekosten RK (R₁₄₋₁) = 2.023 und RK (R₁₄₋₂) = 2.004 betragen und folglich die Route R₁₄₋₂ als die verbindungsoptimale Route RMIN (V₁₄) bestimmt werden. Ohne die Veränderung der Linkkosten LK hätten beide Routen R₁₄₋₁, R₁₄₋₂ identischen Routekosten RK (R₁₄₋₁) = RK (R₁₄₋₂) = 2. In diesem Fall würde für jede angeforderte Verbindung V wegen des deterministischen Verhaltens des Routing-Algorithmus dieselbe verbindungsoptimale Route RMIN (V₁₄) bestimmt werden, z.B. die Route R₁₄₋₁. Entlang der Route R₁₄₋₂ würden solange keine Verbindungen aufgebaut werden, bis die Route R₁₄₋₁ vollständig belegt ist. Ein wesentlicher Vorteil dieser weitgehend gleichmäßigen Verteilung ist darin zu sehen, daß hierdurch im Mittel die Zurückweisungswahrscheinlichkeit für mehrere, in ihrer angeforderten Datenrate im allgemeinen beliebig variierenden Verbindungen signifikant gesenkt wird. Die Zurückweisungswahrscheinlichkeit wird vorteilhaft noch weiter gesenkt, sofern in dem Netz zusätzlich ein Flooding-Verfahren, beispielsweise das PNNI-Verfahren, eingesetzt wird, um überlastete und/oder unterbrochene Übertragungswege zumindest während des Zeitraum der Überlastung und/oder Unterbrechung für das Routen auszuscheiden.

Es sei darauf hingewiesen, daß die Erfindung natürlich auf beliebige Kommunikationsnetze KN, insbesondere verbindungslose Kommunikationsnetze KN wie z.B. das paketorientierte Internet anwendbar ist. Im Internet wird beispielsweise jedes einzelne Paket entlang einer paketindividuellen Route R übermittelt, d.h. die Route jedes Paketes einer virtuellen Verbindung V ist unabhängig von den Routen R der Vorgänger- und Nachfolger-Paketen derselben virtuellen Verbindung V; die Vermittlungsknoten K, die beispielsweise als Internet Router ausgebildet sind, ermitteln hierbei für jedes Paket einer virtuellen Verbindung V jeweils lediglich den nächsten Vermittlungsknoten K - in der Fachwelt auch als "Hop" bezeichnet. Von jedem Router werden gemäß dem erfindungsgemäßen Verfahren ggf. aufeinanderfolgende, zur selben virtuellen Verbindung V gehörende Pakete auf mehrere Übertragungswege U verteilt. Vorteilhaft werden hierbei die an einen Router angeschlossen Übertragungswege U im Mittel gleichmäßig ausgelastet. Hierbei kann es z.B. durch unterschiedliche Laufzeiten der einzelnen Pakete zu Änderungen der ursprünglichen Reihenfolge der Pakete kommen. In diesem Fall wird im Empfänger die ursprüngliche Reihenfolge der Pakete der virtuellen Verbindung V durch eine höhere Protokollschicht wiederhergestellt. Hierfür sind mehrere Verfahren bekannt, z.B. das Transport Control Protocol TCP.

## Patentansprüche

1. Verfahren zur Bewertung von Routen (R) in einem aus Vermittlungsknoten (K) und Übertragungswegen (U) bestehenden Kommunikationsnetz (KN),
bei dem
- aus den Übertragungswegen (U) zugewiesenen Linkkosten (LK) veränderte Linkkosten (L) gebildet werden, und
- die Routen (R) in Abhängigkeit von den veränderten Linkkosten (L) bewertet werden.

2. Verfahren nach Anspruch 1,
**dadurch gekennzeichnet**,
daß die veränderten Linkkosten (L) durch Addition von zufällig gewählten reellen Zahlen (EPS) auf die Linkkosten (L) gebildet werden, wobei der Absolutbetrag der reellen Zahlen (EPS) kleiner ist als eine maximale Zahl, die so klein gewählt wird, daß die Linkkosten (LK) nicht substantiell verändert werden.

3. Verfahren nach einem der Ansprüche 1 oder 2,
**dadurch gekennzeichnet**,
daß eine in Abhängigkeit von den veränderten Linkkosten (L) definierte optimale Route (RMIN) mit Hilfe eines deterministischen Routing-Algorithmus ermittelt wird.

4. Verfahren nach Anspruch 3,
**dadurch gekennzeichnet**,
daß der deterministische Routing-Algorithmus als Dijkstra-Algorithmus ausgebildet ist.

5. Verfahren nach einem der vorhergehenden Ansprüche,
**dadurch gekennzeichnet**,
daß lediglich für eine angeforderte Verbindung (V) durch das Kommunikationsnetz (KN) relevante Routen (R(V)) bewertet werden.

6. Verfahren nach Anspruch 5,
**dadurch gekennzeichnet**,
daß die Bewertung der Routen (R) bei jeder Anforderung einer Verbindung (V) erfolgt.

7. Anwendung des Verfahrens nach einem der Ansprüche 1 bis 6 auf ein Verfahren zum Aufbau einer Verbindung (V) in einem aus Vermittlungsknoten (K) und Übertragungswegen (U) bestehenden Kommunikationsnetz (KN),
bei dem
die Verbindung (V) entlang einer für diese optimalen Route (RMIN(V)) aufgebaut wird.

8. Verfahren nach Anspruch 7,
**dadurch gekennzeichnet**,
daß die für die Verbindung (V) optimale Route (RMIN(V)) von dem Vermittlungsknoten (K) ermittelt wird, der die Anforderung (VA) der Verbindung (V) bearbeitet.

9. Verfahren nach Anspruch 8,
**dadurch gekennzeichnet**,
daß allen Vermittlungsknoten (K) entlang der für die angeforderte Verbindung (V) optimalen Route (RMIN(V)) diese beim Aufbau der Verbindung (V) mitgeteilt wird.
